# EUROPÄISCHE PATENTSCHRIFT

(11) **EP 3 966 356 B1**
(45) Veröffentlichungstag und Bekanntmachung des Hinweises auf die Patenterteilung: **19.07.2023**
(21) Anmeldenummer: 20721544.3
(22) Anmeldetag: 23.04.2020
(51) Int. Cl.: C21D 11/00

(54) **VERFAHREN ZUR WÄRMEBEHANDLUNG EINES METALLISCHEN PRODUKTS**
METHOD FOR THE HEAT TREATMENT OF A METAL PRODUCT
PROCÉDÉ DE TRAITEMENT THERMIQUE D'UN PRODUIT MÉTALLIQUE

(30) Priorität: 07.05.2019 DE 102019206538; 25.06.2019 DE 102019209163
(43) Veröffentlichungstag der Anmeldung: 16.03.2022
(73) Patentinhaber: SMS Group GmbH, 40237 Düsseldorf (DE)
(72) Erfinder: SOMMERS, Ulrich, 40627 Düsseldorf (DE); DAUBE, Thomas, 47279 Duisburg (DE); LHOEST, Alexandre, 4700 Eupen (BE); BEHRENS, Holger, 40699 Erkrath (DE)
(74) Vertreter: Kross, Ulrich
(86) Internationale Anmeldenummer: PCT/EP2020/061376
(87) Internationale Veröffentlichungsnummer: WO 2020/224983

(56) Entgegenhaltungen:
- WO-A1-98/18970
- WO-A1-2004/050923
- DE-A1-102016 100 811
- ZOUHAR G ET AL: "COMPUTERSIMULATION DER GEFUGEENTWICKLUNG FUR ERZEUGNISSE AUS DUNNBRAMMENGIESS-UND-WALZANLAGEN", STAHL UND EISEN,, Bd. 115, Nr. 1, 20. Januar 1995 (1995-01-20), Seiten 65-67, XP000482314, ISSN: 0340-4803

## Beschreibung

Die Erfindung betrifft ein Verfahren zur Wärmebehandlung eines metallischen Produkts nach dem Oberbegriff von Anspruch 1.

Bei der Herstellung von metallischen Produkten, insbesondere in Form von Bändern oder Blechen, kommt in der Regel der Wärmebehandlung des Produkts eine besondere Bedeutung zu, weil hierdurch die mechanischen Eigenschaften des Produkts beeinflusst bzw. eingestellt werden. Die mechanischen Eigenschaften eines metallischen Produkts, die am Ende seiner Herstellung vorliegen, gehören zu den wesentlichen Kriterien für die Qualität eines Endprodukts, das aus dem metallischen Produkt hergestellt wird. Diese mechanischen Eigenschaften werden wesentlich durch die Mikrostruktur des Materials des Bandes bestimmt.

Für den Produktionsprozess zur Herstellung eines metallischen Produkts kann vorgesehen sein, dass genaue Informationen über die Mikrostruktur des Produkts und dessen hieraus resultierenden mechanischen Eigenschaften in den Produktionsprozess einfließen. Beispielsweise ist es zu diesem Zweck aus EP 2 742 158 B1 bekannt, ein Computermodell bzw. eine modellbasierte Regelung einzusetzen, bei dem bzw. der verfügbare messbare Parameter, wie z.B. Temperatur und chemische Zusammensetzung sowie Walzkräfte zugrunde gelegt werden, um einen oder mehrere Parameter zu berechnen, die mit der Mikrostruktur des Materials bzw. den mechanischen Eigenschaften korrelieren, um auf diese Art den Fertigungsprozess anzupassen. Bei der Technologie von EP 2 742 158 B1 können mechanische Eigenschaften nach dem Glühprozess gemessen werden. Nachteilig hierbei ist jedoch, dass die Ergebnisse einer solchen Messung nicht für das Glühen des gemessenen Produkts (z.B. ein Coil) berücksichtigt wird, weil die mechanischen Eigenschaften des Produkts nicht mehr geändert werden können.

Nach einem weiteren Stand der Technik, der beispielsweise aus DE 10 2016 222 644 A1 bekannt ist, können im Zusammenhang mit einem Verfahren zum Walzen und/oder zur Wärmebehandlung eines metallischen Produkts Online-Messungen durchgeführt werden, um die Eigenschaften des Bandes erfassen, die durch die Mikrostruktur des Materials bestimmt werden. In dieser Weise wird der Fertigungsprozess über eine Steuerungseinrichtung beeinflusst. Bei einem solchen Verfahren wird beispielsweise die Langsamkühlung des Produkts mittels einer Röntgenmessung von dessen mechanischen Eigenschaften geregelt. Nachteilig hierbei ist, dass die thermische Trägheit eines Ofens, der zur Wärmebehandlung des Produkts oder zu dessen Abkühlung eingesetzt wird, lediglich eine eingeschränkte Reaktion auf Änderung von Prozessparameter ermöglicht.

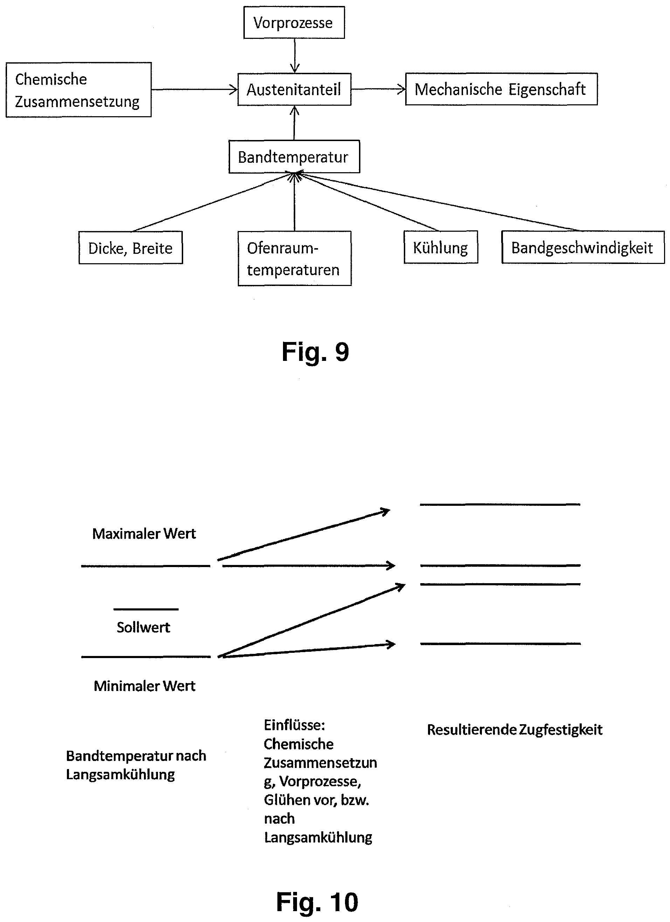

Die verschiedenen Einflüsse auf die mechanischen Eigenschaften eines metallischen Produkts sind in dem Diagramm von Fig. 9 veranschaulicht.

In Bezug auf die Zusammenhänge, die für die mechanischen Eigenschaften eines metallischen Produkts in Fig. 9 dargestellt sind, bestehen nach dem Stand der Technik folgende Nachteile:
a) Im Vorprozess zur Herstellung eines metallischen Produkts können Schwankungen bzw. Änderungen in Bezug auf die Prozessparameter auftreten. Die Änderungen innerhalb eines Coils sind meist kontinuierlich und können mittels einer Regelung des Ofens (Heizstrecke oder Kühlung, insbesondere Langsamkühlung) und einer Messung der Mikrostruktur des Materials kompensiert werden. Gleichwohl können die Änderungen von Coil zu Coil bei gleicher chemischer Analyse, gleicher Stahlgüte, gleicher Dicke und gleicher Breite nur unzureichend aufgrund der Totzeit des Ofens kompensiert werden, weil es im Vorprozess zu den genannten Schwankungen in Bezug auf die Prozessparameter kommt.
b) Es können Änderungen der Banddicke und -breite, der Stahlgüte, der Glühtemperatur und der Liniengeschwindigkeit auftreten: Zur Kompensation dessen kann die Bandtemperatur innerhalb vorgegebener Grenzen beim Coilwechsel eingestellt werden. Gleichwohl wird nach dem Stand der Technik in der Regel nur auf die Einstellung der Temperatur geachtet.
c) Es können Änderungen in der Chemie bzw. der chemischen Zusammensetzung des Produkts auftreten. Falls dies innerhalb einer Stahlsorte/Legierung auftritt, müssen die Bandtemperaturen verändert werden, um den Austenitanteil innerhalb vorgegebener Grenzen einzustellen. Bei Legierungswechsel über ein Coil ändert sich die chemische Analyse und es muss zusätzlich meist ein neuer Austenitanteil eingestellt werden.

Nach dem vorstehend genannten Stand der Technik besteht ein Problem darin, dass insbesondere sprunghafte Änderungen der Materialeigenschaften eines metallischen Produkts, die beispielsweise bei einem Coilwechsel auftreten können, nicht oder nur unzureichend kompensiert werden können. Dies kann dann der Fall sein, wenn sich der Istwert für den Austenitanteil von Coil zu Coil (z.B. aufgrund von anderer Chemie, anderen bzw. geänderten Vorprozessdaten, Liniengeschwindigkeit, Oberflächeneigenschaften, usw.) oder über die Coillänge (z.B. Änderung im Vorprozess, Liniengeschwindigkeit, Oberflächeneigenschaften, Übergänge im Ofen, Coil aus Übergangsbrammen im Warmwalzwerk) bei gleichbleibendem Austenitsollwert ändert. Im ersten Fall (typischerweise bei Änderungen der Liniengeschwindigkeit) kommt es zu schlagartigen Änderungen, im zweiten Fall ergeben sich Änderung über die Bandlänge. In beiden Fällen reagiert eine herkömmliche Regelung, die beispielweise für ein Verfahren gemäß DE 10 2016 222 644 A1 bekannt ist, entsprechend der thermischen Trägheit des Heiz- oder Kühlbereichs des Ofens darauf jedoch erst mit einer nachteiligen Verzögerung, bevor der neue Sollwert für den Austenitanteil des Produkts erreicht wird.

Fig. 10 zeigt eine symbolische Darstellung für eine Änderung der mechanischen Eigenschaften eines metallischen Produkts, am Beispiel der resultierenden Zugfestigkeit, wenn das Produkt beispielsweise mit einem Verfahren gemäß DE 10 2016 222 644 A1 einer Wärmebehandlung unterzogen wird. Bei diesem Verfahren wird ein Qualitätsfenster für die Temperatur des Produkts (z.B. in Form eines Bands) basierend auf einem maximalen Wert und eine minimalen Wert bestimmt, wobei die maximalen und minimalen Werte aus gemessenen Werten für die Temperatur des Produkts berechnet werden können. Die Fig. 10 verdeutlicht am Beispiel der resultierenden Zugfestigkeit des Produkts bzw. des Bands einen weiteren Nachteil des Verfahrens gemäß DE 10 2016 222 644 A1 dahingehend, dass unter Benutzung der Temperaturqualitätsfenster (etwa bei einem Coilwechsel) die Änderung der mechanischen Eigenschaften (z.B. Zugfestigkeit, Streckgrenze, Bruchdehnung, etc.) relativ groß sind. Dies kommt in der Darstellung von Fig. 10 durch den relativ großen Abstand zwischen den parallel zueinander verlaufenden horizontalen Linien zum Ausdruck, die oberhalb der Kommentierung "resultierenden Zugfestigkeit" angeordnet sind.

Aus DE 10 2016 100 811 A1 ist ein gattungsgemäßes Verfahren zur Wärmebehandlung eines metallischen Produkts nach dem Oberbegriff von Anspruch 1 bekannt. Hierbei erfolgt die Temperaturführung für das metallische Produkt auf Grundlage eines Vergleichs von erfassten aktuellen Ist- Gefügekennwerten mit einem vorgegebenen Sollwert, wobei ein sich ergebender Differenzwert als Regelungsgröße für den Prozess verwendet wird.

Entsprechend liegt der Erfindung die Aufgabe zugrunde, die Wärmebehandlung eines metallischen Produkts auch in Anbetracht von möglichen sprunghaften Änderungen von dessen Materialeigenschaften zu optimieren.

Die obige Aufgabe wird durch ein Verfahren mit den Merkmalen von Anspruch 1 gelöst. Vorteilhafte Weiterbildungen der Erfindung sind in den abhängigen Ansprüchen definiert.

Ein Verfahren gemäß der vorliegenden Erfindung dient zur Wärmebehandlung eines metallischen Produkts, insbesondere in Form eines Bandes oder Blechs. Bei diesem Verfahren wird das Produkt durch eine Ofeneinrichtung mit einer vorbestimmten Geschwindigkeit in einer Förderrichtung hindurchgeführt. Die Ofeneinrichtung wird hierbei mittels einer Regeleinrichtung geregelt. Im Zuge der Wärmebehandlung wird das Produkt bis zu einer ersten Stelle erwärmt und im Anschluss daran bis zu einer zweiten Stelle oder bis zu einer dritten Stelle abgekühlt, wobei die zweite bzw. dritte Stelle - in Förderrichtung des Produkts gesehen - jeweils der ersten Stelle nachgelagert sind. Das Verfahren sieht folgende weitere Schritte vor:
(i) Bestimmen eines Qualitätsfensters für das Produkt an der zweiten oder dritten Stelle in Bezug auf den Austenitanteil, wobei das Qualitätsfenster durch einen minimalen Wert und einen maximalen Wert definiert ist, wobei der minimale Wert und der maximale Wert in Bezug auf den Austenitanteil aus zumindest einer messtechnisch und/oder labortechnisch ermittelten mechanischen Eigenschaft des Produkts (P) abgeleitet wird,
(ii) Vorhersagen einer Temperatur für das Produkt an der zweiten oder dritten Stelle durch Lösen einer Wärmeübertragungsgleichung in Abhängigkeit von einer Temperatur des Produkts an einer der zweiten Stelle oder der dritten Stelle vorgelagerten Position und/oder in Abhängigkeit von der Geschwindigkeit des Produkts,
(iii) Vorhersagen des Austenitanteils des Produkts an der zweiten oder dritten Stelle mittels eines datenbasierten Modells auf Grundlage der vorhergesagten Temperatur gemäß Schritt (ii), und
(iv) falls ein für die zweite oder dritte Stelle vorhergesagter Austenitanteil des Produkts gemäß Schritt (iii) außerhalb des Qualitätsfensters von Schritt (i) liegt: Anpassen der Geschwindigkeit des Produkts in der Förderrichtung mittels der Regeleinrichtung, derart, dass damit der für die zweite oder dritte Stelle vorhergesagte Austenitanteil des Produkts innerhalb des Qualitätsfensters gelangt bzw. liegt, wobei die Geschwindigkeit des Produkts in der Förderrichtung für die Regeleinrichtung als Stellgröße dient.

Die vorstehend genannte Wärmebehandlung nach der vorliegenden Erfindung kann an einer ersten Stelle, an einer zweiten Stelle und an einer dritten Stelle stattfinden. Hierbei befindet sich die zweite Stelle - in der Förderrichtung des Produkts gesehen - zwischen der ersten Stelle und der dritten Stelle. Beispielsweise kann für das erfindungsgemäße Verfahren vorgesehen sein, dass das Produkt bis zur ersten Stelle erwärmt, zwischen der ersten Stelle und der zweiten Stelle langsam (ab-) gekühlt, und zwischen der zweiten Stelle und der dritten Stelle schnell gekühlt wird.

In Bezug auf den vorstehend genannten Schritt (ii) des erfindungsgemäßen Verfahrens wird gesondert hervorgehoben, dass die Vorhersage einer Temperatur für das Produkt an der zweiten oder dritten Stelle auf Grundlage dessen erfolgen kann, dass eine Wärmeübertragungsgleichung für die genannten Stellen gelöst wird. Alternativ hierzu ist es in gleicher Weise möglich, dass im Schritt (ii) eine Temperatur für das Produkt durch abgespeicherte Messungen vorhergesagt wird - der Rückgriff auf solche abgespeicherten Messungen entspricht dem Auslesen einer Datenbank in Bezug auf Daten bzw. Messungen, die im Vorfeld bzw. zur Vorbereitung der aktuellen Wärmebehandlung generiert worden sind.

Der Erfindung liegt die wesentliche Erkenntnis zugrunde, dass eine Vorsteuerung auf Grundlage des Schritts (iii), bei dem mittels eines datenbasierten Modells der Austenitanteil des Produkts an der zweiten Stelle oder an der dritten Stelle der Wärmebehandlung vorhergesagt wird, erfolgt, um insbesondere bei sprunghaften Änderungen der Materialeigenschaften des Produkts die Zeitkonstante der eingesetzten Ofeneinrichtung zu umgehen und um damit in Anbetracht der vorhergesagten Austenitanteile des Produkts eine schnellere Anpassung der Wärmebehandlung für das Produkt zu erreichen.

Die Anpassung der Geschwindigkeit des Produkts in der Förderrichtung bzw. die Bandgeschwindigkeit, die im Schritt (iv) des erfindungsgemäßen Verfahrens im Falle der diesbezüglich genannten Bedingung erfolgt, ist für den Fall vorteilhaft, dass grö-βere Änderungen im Austenitgehalt vorhergesagt worden bzw. erforderlich sind. Diesbezüglich versteht sich, dass bei einer solchen Anpassung auch die Kapazität der Langsamkühlung für das Produkt berücksichtigt wird.

In vorteilhafter Weiterbildung des erfindungsgemäßen Verfahrens kann vorgesehen sein, dass im Schritt (iii) das Vorhersagen des Austenitanteils des Produkts (P) an der zweiten Stelle oder an der dritten Stelle auch mittels eines metallurgischen Modells auf Grundlage der gemäß Schritt (ii) vorhergesagten Temperatur erfolgt.

An dieser Stelle wird gesondert darauf hingewiesen, dass mit der für das erfindungsgemäße Verfahren eingesetzten Ofeneinrichtung sowohl ein Erwärmen und/oder ein Abkühlen des Produkts möglich ist, wenn dieses durch die Ofeneinrichtung hindurchgeführt wird. Entsprechend kann mittels der Ofeneinrichtung wahlweise oder in Abhängigkeit von bestimmten Segmenten dieser Ofeneinrichtung eine Erhöhung oder eine Verminderung der Temperatur des Produkts erreicht werden, wobei im Zuge dessen auch der Temperaturgradient, d.h. die Geschwindigkeit der Erwärmung/Abkühlung als Funktion der Zeit eingestellt werden kann. Dies bedeutet, dass mit der Ofeneinrichtung im Zusammenhang mit der vorliegenden Erfindung ein langsames oder schnelles Erwärmen des Produkts, und/oder ein langsames oder schnelles Abkühlen des Produkts möglich sind.

In vorteilhafter Weiterbildung des erfindungsgemäßen Verfahrens kann im Schritt (iv) vorgesehen sein, dass bei Vorliegen der genannten Bedingung neben der Geschwindigkeit des Produkts in Förderrichtung zusätzlich auch ein Anpassen von zumindest einer Zonentemperatur der Ofeneinrichtung mittels der Regeleinrichtung erfolgt, derart, dass damit der für die zweite oder dritte Stelle vorhergesagte Austenitanteil des Produkts innerhalb des Qualitätsfensters gelangt bzw. liegt, wobei eine Zonentemperatur der Ofeneinrichtung für die Regeleinrichtung als Stellgröße dient.

Im Zusammenhang mit der soeben genannten vorteilhaften Weiterbildung des erfindungsgemäßen Verfahrens wird in Bezug auf den Schritt (iv) gesondert hervorgehoben, dass ein Anpassen einer Zonentemperatur der Ofeneinrichtung gemäß und im Sinne der vorliegenden Erfindung in gleicher Weise ein Erwärmen und/oder ein Abkühlen des metallischen Produkts bedeuten kann. Dies bedeutet, dass mit einer Zonentemperatur auch eine Kühlzone gemeint sein kann, in der die Temperatur des metallischen Produkts vermindert wird. Somit erfolgt das Anpassen von zumindest einer Zonentemperatur zwecks einer Erwärmung oder einer Abkühlung des metallischen Produkts, letzterenfalls beispielsweise durch Verwendung einer (Kühl-)Flüssigkeit und/oder eines Fluids. Zum Abkühlen des Produkts kann eine Einrichtung zum Einsatz kommen, aus der ein Gas-Gemisch aus (z.B. hauptsächlich) Stickstoff und Wasserstoff vorzugsweise unter Druck in Richtung einer Oberfläche bzw. der Oberflächen des Produkts ausgebracht wird, um dadurch die Temperatur des Produkts gezielt zu vermindern. Eine solche Einrichtung kann innerhalb der Ofeneinrichtung angeordnet bzw. aufgenommen sein. Ergänzend und/oder alternativ ist es möglich, dass zum Abkühlen des Produkts Wasser verwendet wird, beispielsweise in Form eines Tauchbads, durch welches das Produkt hindurchgeführt wird, und/oder in Form von Kühlflüssigkeit, die auf die Oberfläche(n) des Produkts vorzugsweise unter Druck ausgebracht wird.

Bei dem erfindungsgemäßen Verfahren wird der vorhergesagte Austenitanteil des Produkts, der entweder an der zweiten Stelle (beispielsweise nach der Langsamkühlung des Produkts) oder an der dritten Stelle (beispielsweise nach der Schnellkühlung des Produkts) der Wärmebehandlung vorliegt, als Zielgröße für den Schritt (iii) verwendet. Dies bedeutet, dass der Einsatz eines datenbasierten Modells gemäß Schritt (iii), und ggf. auch eines metallurgischen Modells,das Vorhersagen des Austenitanteils des Produkts an der zweiten oder dritten Stelle der Wärmebehandlung ermöglicht.

Hierbei kommt der Bestimmung eines Qualitätsfensters für das Produkt an der zweiten Stelle oder an der dritten Stelle in Bezug auf den Austenitanteil gemäß Schritt (i) eine besondere Bedeutung zu. Ein solches Qualitätsfenster ist jeweils durch einen minimalen Wert und einen maximalen Wert definiert, abgeleitet beispielsweise aus Mess- und/oder Laborwerten für die mechanischen Eigenschaften des Produkts. Zweckmäßigerweise können für die vorliegende Erfindung der minimale Wert und der maximale Wert für das Qualitätsfenster in Bezug auf zumindest eine mechanische Eigenschaft messtechnisch bestimmt werden. Bei einer solchen mechanischen Eigenschaft des Produkts kann es sich um die Zugfestigkeit und/oder Streckgrenze und/oder Dehnung handeln.

Eine weitere wesentliche Grundlage des erfindungsgemäßen Verfahrens beruht darauf, dass die Temperaturen für das Produkt an der zweiten Stelle oder an der dritten Stelle, wie es für den Schritt (ii) vorgesehen ist, mit hoher Genauigkeit durch Lösen einer Wärmeübertragungsgleichung möglich ist. Hierzu ist nach dem Stand der Technik der Einsatz eines mathematischen Modells bekannt und beispielsweise in dem Aufsatz von A.L. Lhoest und K.-G. Butzbach "Mathematisches Modell ermöglicht höhere Anlagenproduktivität und bessere Bandqualität" (erschienen in "stahl und Eisen" 129 (2009) Nr. 11, Seiten 79-89) beschrieben, wobei auf diesen Aufsatz an dieser Stelle ausdrücklich Bezug genommen wird.

Mit Anwendung der vorliegenden Erfindung besteht in Bezug auf die Wärmebehandlung eines metallischen Produkts ein Paradigmenwechsel von Temperaturregelung zu Gefügeregelung, indem gemäß Schritt (iv) zumindest eine Zonentemperatur der Ofeneinrichtung und/oder die Geschwindigkeit des Produkts in der Förderrichtung mittels der Steuer- und/oder Regeleinrichtung in Abhängigkeit davon angepasst wird, ob der gemäß Schritt (iii) für die zweite Stelle oder für die dritte Stelle vorhergesagte Austenitanteil des Produkts außerhalb des Qualitätsfensters von Schritt (i) liegt. Hierdurch ist es möglich, insbesondere bei Übergängen von einem Coil zum nächsten Coil, oder bei insbesondere signifikanten Änderungen innerhalb ein- und desselben Coils, einen Ausschuss an Material zumindest zu verringern oder gar auszuschließen. Bei sprunghaften Änderungen der Eingangsparameter (z.B. Chemie des Stahlbandes oder anderer Eigenschaften aus den Vorprozessen wie Warmwalzen bei Coilwechsel im Wärmebehandlungsprozess) kann durch die genannte Vorkompensation, die maßgeblich auf den Schritten (iii) und (iv) des erfindungsgemäßen Verfahrens basiert, der Anteil an Schrottlänge des Produkts (z.B. in Form eines Bandes oder Blechs) zumindest reduziert werden.

In vorteilhafter Weiterbildung der Erfindung kann die Berechnungsart für den Schritt (ii) und/oder für den Schritt (iii) schneller als in Echtzeit gewählt sein. Auf Grundlage dessen ist es mit dem erfindungsgemäßen Verfahren möglich, für die Wärmebehandlung des Produkts einen "Blick in die Zukunft" zu richten, nämlich im Hinblick auf die vorhergesagten Austenitanteile des Produkts an der zweiten Stelle oder an der dritten Stelle der Wärmebehandlung.

In vorteilhafter Weiterbildung der Erfindung erfolgt das Anpassen gemäß Schritt (iv) nach Art einer Regelung. Hierbei übernimmt die Steuer- und/oder Regeleinrichtung die Funktion eines Reglers, wobei eine Zonentemperatur der Ofeneinrichtung und/oder die Geschwindigkeit des Produkts, mit der es in der Förderrichtung durch die Ofeneinrichtung hindurch transportiert bzw. bewegt wird, als Stellgröße(n) dienen.

Bei der vorliegenden Erfindung wird erreicht, dass durch eine Kombination der Regelung mithilfe der Steuer- und/oder Regeleinrichtung für den Austenitanteil des Produkts und der Handhabung bzw. Berücksichtigung der Sollwerte für den Austenitanteil die Regelung der Ofeneinrichtung vorausschauend betrieben wird. Hierdurch werden für das Produkt bestmögliche mechanische Eigenschaften insbesondere bei Übergängen zwischen zwei Coils erzielt.

Somit eignet sich das Verfahren gemäß der vorliegenden Erfindung insbesondere für den Fall, dass für das Produkt vorzugsweise an der zweiten Stelle oder an der dritten Stelle der Wärmebehandlung ein Coilwechsel bevorsteht.

In vorteilhafter Weiterbildung der Erfindung wird für das Produkt ein Austenit-Sollwert bestimmt, der innerhalb des Qualitätsfensters von Schritt (i) liegt. Hierzu ist es zweckmäßig, dass ein solcher Sollwert für den Austenitgehalt auf Grundlage eines messtechnisch bestimmten Wertes von zumindest einer mechanischen Eigenschaft des Produkts berechnet wird. Wie bereits an anderer Stelle erläutert, kann es sich bei einer solchen mechanischen Eigenschaft des Produkts um die Zugfestigkeit und/oder Streckgrenze und/oder Dehnung handeln. Jedenfalls ist es für die Durchführung des Schritts (iv) des erfindungsgemäßen Verfahrens zweckmäßig, wenn der Abstand für den an der zweiten oder dritten Stelle der Wärmebehandlung vorhergesagten Austenitanteil zu dem besagten Sollwert möglichst gering ist, wodurch beispielsweise die Betriebsweise der Ofeneinrichtung bei einem Übergang zwischen zwei Coils optimiert wird. Idealerweise erfolgt die genannte Regelung von zumindest einer Zonentemperatur der Ofeneinrichtung und/oder der Geschwindigkeit des Produkts in der Förderrichtung mittels der Steuer- und/oder Regeleinrichtung derart, dass der vorhergesagte Austenitanteil des Produkts an der zweiten bzw. dritten Stelle der Wärmebehandlung mit dem genannten Sollwert innerhalb des Qualitätsfensters von Schritt (i) übereinstimmt, jedenfalls nur eine kleine Abweichung von diesem Sollwert aufweist.

In vorteilhafter Weiterbildung der Erfindung kann vorgesehen sein, dass für die Durchführung der vorstehend genannten Schritte (i) bis (iv) jeweils der Austenitanteil des Produkts berücksichtigt wird, der an der zweiten Stelle der Wärmebehandlung vorliegt. Dies bedeutet, dass der vorhergesagte Austenitanteil des Produkts am Ende der Langsamkühlung Berücksichtigung findet. Entsprechend wird für diesen Fall im Schritt (ii) auch die Temperatur des Produkts am Ende der Langsamkühlung vorhergesagt, wobei anschließend im Schritt (iii) für die Stelle der Wärmebehandlung, wo die Langsamkühlung des Produkts beendet bzw. abgeschlossen ist, dann auf Grundlage der vorgeschalteten Temperaturvorhersage der zugehörige Austenitanteil mittels des metallurgischen und/oder datenbasierten Models vorhergesagt wird.

In vorteilhafter Weiterbildung der Erfindung wird die genannte Wärmebehandlung für ein Produkt bestehend aus Stahl durchgeführt, der einen Massenanteil an Silizium von zumindest 0,3% und einen Massenanteil an Mangan von zumindest 1 % aufweist.

Für den vorstehend genannten Stahltyp ist es im Sinne der vorliegenden Erfindung zweckmäßig, wenn der Massenanteil an Silizium zumindest 0,3 %, 0,31 %, 0,32 %, 0,33 %, 0,34 %, 0,35 %, 0,36 %, 0,37 %, 0,38 %, 0,39 %, 0,4 %, 0,41 %, 0,42 %, 0,43 %, 0,44 %, 0,45 %, 0,46 %, 0,47 %, 0,48 %, 0,49 %, 0,5 %, , 0,51 %, 0,52 %, 0,53 %, 0,54 %, 0,55 %, 0,56 %, 0,57 %, 0,58 %, 0,59 %, 0,6%, 0,61 %, 0,62 %, 0,63 %, 0,64 %, 0,65 %, 0,66 %, 0,67 %, 0,68 %, 0,69 %, 0,7 %, 0,71 %, 0,72 %, 0,73 %, 0,74 %, 0,75 %, 0,76 %, 0,77 %, 0,78 %, 0,79 %, 0,8 %, 0,81 %, 0,82 %, 0,83 %, 0,84%, 0,85 %, 0,86 %, 0,87 %, 0,88%, 0,89%, 0,9 %, 0,91 %, 0,92 %, 0,93 %, 0,94 %, 0,95 %, 0,96 %, 0,97 %, 0,98 %, 0,99 %, 1% oder bis zu 1,5 % beträgt. Dies bedeutet, dass der Massenanteile an Silizium die vorstehend genannten Werte annehmen kann, im Sinne einer Untergrenze.

In vorteilhafter Weiterbildung der Erfindung kann für den genannten Stahltyp der Massenanteil an Mangan zumindest 1,01 %, 1,02 %, 1,03 %, 1,04 %, 1,05 %, 1,06 %, 1,07 %, 1,08 %, 1,09 %, 1,1 %, 1,11 %, 1,12 %, 1,13 %, 1,14%, 1,15 %, 1,16 %, 1,17 %, 1,18 %, 1,19 %, 1,2 %, 1,21 %, 1,22 %, 1,23 %, 1,24 %, 1,25 %, 1,26 %, 1,27 %, 1,28 %, 1,29 %, 1,3 %, 1,31 %, 1,32 %, 1,33 %, 1,34 %, 1,35 %, 1,36 %, 1,37 %, 1,38 %, 1,39 %, 1,4 %, 1,41 %, 1,42 %, 1,43 %, 1,44 %, 1,45 %, 1,46 %, 1,47 %, 1,48 %, 1,49 %, 1,5 %, 1,51 % oder bis zu 2% beträgt. Dies bedeutet, dass der Massenanteile an Mangan die vorstehend genannten Werte annehmen kann, im Sinne einer Untergrenze.

In vorteilhafter Weiterbildung der Erfindung ist es für den genannten Stahltyp möglich, dass die Summe der Massenanteile an Silizium und Mangan zumindest 1,3 % beträgt. Zweckmäßigerweise kann die Summe der Massenanteile an Silizium und Mangan zumindest 1,31 %, 1,32 %, 1,33 %, 1,34 %, 1,35 %, 1,36 %, 1,37 %, 1,38 %, 1,39 %, 1,40 %, 1,41 %, 1,42 %, 1,43 %, 1,44 %, 1,45 %, 1,46 %, 1,47 %, 1,48 %, 1,49 %, 1,50 %, 1.3 % ...1,51 %, 1,52 %, 1,53 %, 1,54 %, 1,55 %, 1,56 %, 1,57 %, 1,58 %, 1,59 %, 1,6 %, 1,61 %, 1,62 %, 1,63 %, 1,64 %, 1,65 %, 1,66 %, 1,67 %, 1,68 %, 1,69 %, 1,7 %, 1,71 %, 1,72 %, 1,73 %, 1,74 %, 1,75 %, 1,76 %, 1,77 %, 1,78 %, 1,79 %, 1,8 %, 1,81 %, 1,82 %, 1,83 %, 1,4 %, 1,5 %, 1,86 %, 1,87 %, 1,88 %, 1,89 %, 1,9 %, 1,91 %, 1,92 %, 1,93 %, 1,94 %, 1,95 %, 1,96 %, 1,97 %, 1,98 %, 1,99 %, 2 %, 2,01 % oder bis zu 2,5% betragen. Dies bedeutet, dass die Summe der Massenanteile an Silizium und Mangan die vorstehend genannten Werte annehmen kann, im Sinne einer Untergrenze.

In vorteilhafter Weiterbildung der Erfindung kann vorgesehen sein, dass zur Wärmebehandlung des Produkts zumindest ein Induktor vorgesehen ist, der von der Steuer- und/oder Regeleinrichtung gesteuert oder geregelt wird. Ein solcher Induktor kann entweder innerhalb der Ofeneinrichtung und/oder - in der Förderrichtung des Produkts gesehen - stromaufwärts und/oder stromabwärts von der Ofeneinrichtung angeordnet sein. Zweckmäßigerweise handelt es sich bei einem solchen Induktor um einen transversalen Induktor, mit dem der Eintrag von großen Energiedichten in das metallische Produkt bzw. Band/Blech möglich sind.

In vorteilhafter Weiterbildung der Erfindung kann vorgesehen sein, dass der Austenitanteil für das Produkt an der zweiten und/oder dritten Stelle messtechnisch ermittelt wird. Vorzugsweise erfolgt hierbei die Messung des Austenitanteils an der zweiten und/oder dritten Stelle zerstörungsfrei insbesondere durch Verwendung von Röntgenstrahlung. Durch eine solche Messung des Austenitanteils für das Produkt an der zweiten und/oder dritten Stelle ist es für die vorliegende Erfindung möglich, den Austenitanteil, welcher gemäß Schritt (iii) vorhergesagt worden ist, zu verifizieren, um ggf. in Abhängigkeit hiervon die Regelung gemäß Schritt (iv) anzupassen bzw. zu optimieren.

Nachstehend sind Ausführungsbeispiele der Erfindung anhand einer schematisch vereinfachten Zeichnung im Detail beschrieben. Es zeigen:
- Fig. 1: eine vereinfachte Seitenansicht einer Bearbeitungslinie zur Wärmebehandlung eines metallischen Produkts mit einem Verfahren nach der vorliegenden Erfindung,
- Fig. 2: ein Blockdiagramm für eine Steuer- und/oder Regeleinrichtung, die in der Bearbeitungslinie von Fig. 1 eingesetzt wird,
- Fig. 3: einen Teil der Steuer- und/oder Regeleinrichtung von Fig. 2 gemäß einer modifizierten Ausführungsform,
- Fig. 4: ein Diagramm für eine Temperatur während der Wärmebehandlung nach dem erfindungsgemäßen Verfahren, als Funktion der Zeit bzw. Ofenlänge,
- Fig. 5: das Diagramm von Fig. 4, ergänzt um Erläuterungen in Bezug auf die Mikrostruktur des wärmebehandelten metallischen Produkts,
- Fig. 6: ein Diagramm für eine Temperatur während der Wärmebehandlung nach dem erfindungsgemäßen Verfahren gemäß einer modifizierten Ausführungsform, als Funktion der Zeit bzw. Ofenlänge,
- Fig. 7: ein Diagramm für den Austenitanteil als Funktion einer kumulierten Coillänge, wobei dieser Austenitanteil sich während der Wärmebehandlung eines metallischen Produkts mit dem erfindungsgemäßen Verfahren einstellt,
- Fig. 8: eine symbolische Darstellung der resultierenden Zugfestigkeit, die sich im Zuge des erfindungsgemäßen Verfahrens ausgehend von einem Austenitanteil des Produkts nach der Langsamkühlung einstellt,
- Fig. 9: ein Diagramm zur Veranschaulichung von Einflüssen nach dem Stand der Technik auf die mechanischen Eigenschaften eines metallischen Produkts bei dessen Herstellung bzw. Wärmebehandlung, und
- Fig. 10: eine symbolische Darstellung der resultierenden Zugfestigkeit, die sich im Zuge eines herkömmlichen Verfahrens ausgehend von einer Bandtemperatur des Produkts nach der Langsamkühlung einstellt.

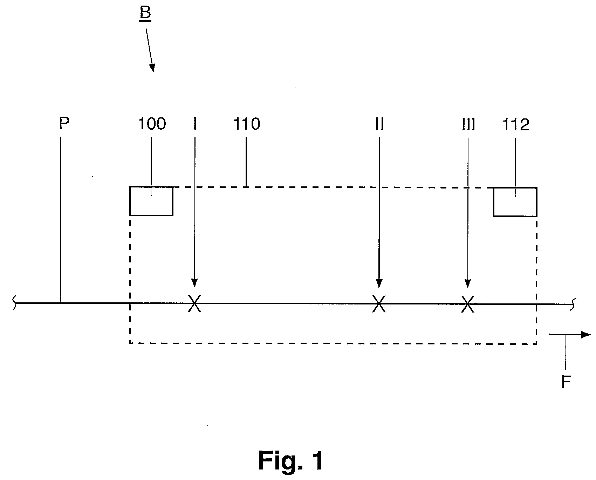

Nachstehend sind unter Bezugnahme auf die Fig. 1-8 bevorzugte Ausführungsform eines erfindungsgemäßen Verfahrens erläutert, mit dem für ein metallisches Produkt P in einer Bearbeitungslinie B, die mit einer Steuer- und/oder Regeleinrichtung 100 und einer hiervon angesteuerten bzw. geregelten Ofeneinrichtung 110 ausgestattet ist, eine Wärmebehandlung durchgeführt wird. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Fig. 1 zeigt symbolisch vereinfacht eine Verarbeitungslinie B, entlang der ein metallisches Produkt P einer gezielten Wärmebehandlung unterzogen wird. Im Verlauf dieser Wärmebehandlung wird das Produkt P erwärmt und im Anschluss daran wieder abgekühlt.

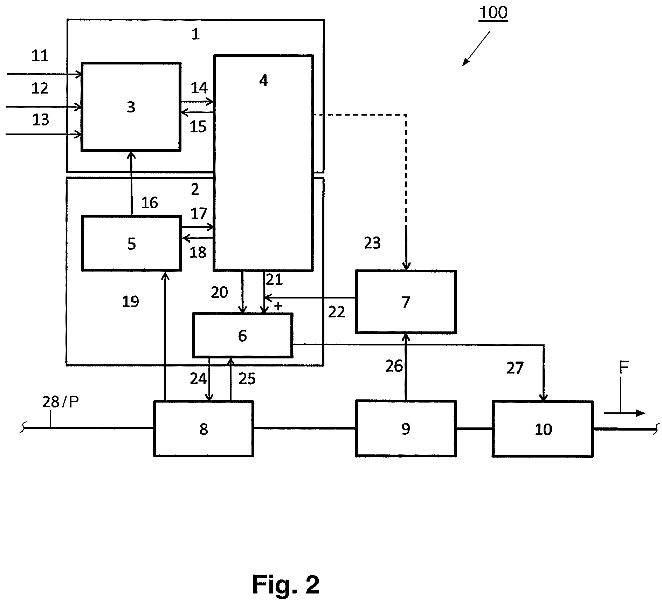

Das Produkt P wird in der Bearbeitungslinie B in einer Förderrichtung bewegt, die in Fig. 1 und in Fig. 2 jeweils mit einem Pfeil "F" symbolisiert ist. Hierbei findet die Wärmebehandlung des Produkts P entlang der Bearbeitungslinie B an bzw. zwischen verschiedenen Stellen statt. Im Einzelnen sind hierzu eine erste Stelle I, eine zweite Stelle II und eine dritte Stelle III vorgesehen, wobei diese Stellen in der Darstellung von Fig. 1 vereinfacht jeweils durch ein "X" symbolisiert sind. Aus der Fig. 1 ist ersichtlich, dass die zweite Stelle II - in Förderrichtung F des Produkts P gesehen - zwischen der ersten Stelle I und der dritten Stelle III liegt.

Die Bearbeitungslinie B ist mit einer Steuer- und/oder Regeleinrichtung 100 und mit einer Ofeneinrichtung 110 ausgestattet. Die Ofeneinrichtung 110 ist in der Darstellung von Fig. 1 vereinfacht durch ein Rechteck mit gestrichelten Linien symbolisiert.

Zur Durchführung eines erfindungsgemäßen Verfahrens und der hierzu vorgesehenen Wärmebehandlung des Produkts wird die Ofeneinrichtung 100 von der Steuer- und/oder Regeleinrichtung 100 gezielt gesteuert und/oder geregelt, was nachfolgend noch im Detail erläutert wird.

Im Zuge seiner Wärmebehandlung entlang der Bearbeitungslinie B wird das Produkt P durch die Ofeneinrichtung 110 hindurchgeführt. Mittels der Ofeneinrichtung 110 ist es möglich, das Produkt P gezielt zu erwärmen und/oder abzukühlen. Die Abkühlung des Produkts P kann bei dem erfindungsgemäßen Verfahren, wie vorstehend bereits an anderer Stelle erläutert, durch den Einsatz eines kühlenden Gases (z.B. ein Gemisch aus Stickstoff und Wasserstoff) und/oder durch Verwendung einer Kühlflüssigkeit (z.B. in Form eines Tauchbades, oder durch Ausbringen der Kühlflüssigkeit auf Oberflächen des Produkts durch Spritzdüsen) realisiert werden, beispielsweise innerhalb der Ofeneinrichtung, stromaufwärts der Ofeneinrichtung und/oder stromabwärts der Ofeneinrichtung, jeweils in Förderrichtung F des Produkts gesehen.

Für das erfindungsgemäße Verfahren kann ein Induktor 112 zum Einsatz kommen. Ein solcher Induktor 112 kann innerhalb der Ofeneinrichtung 110 angeordnet sein, was bei der Darstellung von Fig. 112 durch ein Rechteck symbolisch vereinfacht gezeigt ist. In Bezug auf die Positionierung des Rechtecksymbols für den Induktor 112 rechts oben innerhalb des gestrichelten Rechtecks 110 für die Ofeneinrichtung wird gesondert darauf hingewiesen, dass diese Positionierung mit der tatsächlichen räumlichen Anordnung des Induktors 112 innerhalb der Ofeneinrichtung 110 nicht korreliert. Jedenfalls kommt der Induktor 112 innerhalb der Ofeneinrichtung 110 an einer solchen Stelle zum Einsatz, an der eine hohe Energiedichte zur Erwärmung des Produkts P in kurzer Zeit gewünscht ist. Zu diesem Zweck ist der Induktor 112 vorzugsweise als transversaler Induktor ausgebildet.

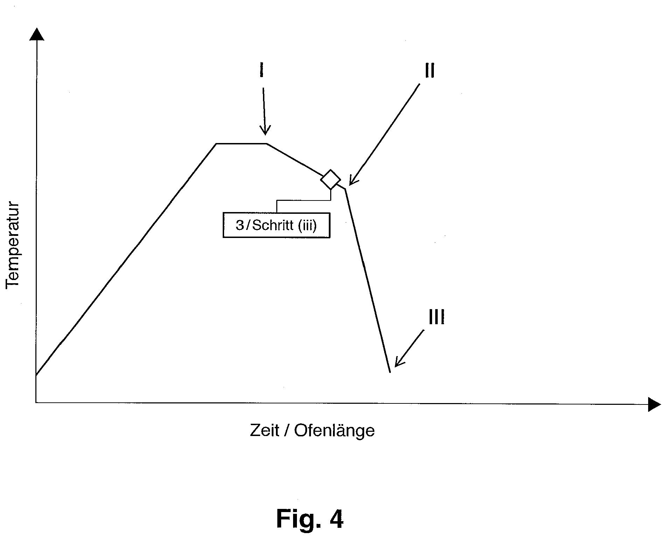

Zur Durchführung eines Verfahrens nach der vorliegenden Erfindung kann vorgesehen sein, dass das Produkt P bis zur ersten Stelle I erwärmt bzw. dessen Temperatur erhöht wird. Im Anschluss daran wird das Produkt P zwischen der ersten Stelle I und der zweiten Stelle II langsam abgekühlt. Hiernach wird das Produkt P zwischen der zweiten Stelle II und der dritten Stelle III schnell abgekühlt. Ein entsprechender Temperaturverlauf für das Produkt P als Funktion der Zeit bzw. der Länge der Ofeneinrichtung 110 ist jeweils in den Darstellungen von Fig. 4, Fig. 5 und Fig. 6 gezeigt und nachfolgend noch gesondert erläutert.

Fig. 2 zeigt ein Blockdiagramm für die Steuer- und/oder Regeleinrichtung 100. Die einzelnen Elemente, die Teil dieser Steuer- und/oder Regeleinrichtung 100 sind, und die hiermit in Verbindung stehenden Abläufe bzw. Dinge zur Durchführung eines Verfahrens nach der vorliegenden Erfindung sind mit folgenden Bezugszeichen versehen bzw. erläutert, im Sinne einer Legende:
- P: metallisches Produkt (z.B. Band oder Blech), auch mit "28" bezeichnet;
- 1: Austenitanteilberechnung (für das Beispiel der Langsamkühlung gemäß der ersten Ausführungsform des erfindungsgemäßen Verfahrens, ansonsten Modell für die Größe, die das Messgerät 9 misst);
- 2: Bandtemperaturberechnung;
- 3: Vorhersage Austenitanteil (für das Beispiel der Langsamkühlung gemäß der ersten Ausführungsform des erfindungsgemäßen Verfahrens, ansonsten Modell für die Größe, die das Messgerät 9 misst);
- 4: Vorgabe Bandtemperaturen;
- 5: Vorhersage Bandtemperaturen;
- 6: Regler für Zonentemperaturen der Ofeneinrichtung 110 (damit sind auch die Kühlzonen gemeint) und/oder für die Geschwindigkeit des Produkts P in der Förderrichtung F (= Bandgeschwindigkeit);
- 7: Regler mit Austenitanteil (für das Beispiel der Langsamkühlung gemäß der ersten Ausführungsform des erfindungsgemäßen Verfahrens, ansonsten Modell für die Größe, die das Messgerät 9 misst);
- 8: Langsamkühlung und Bereiche davor;
- 9: Röntgenmessgerät
- 10: Schnellkühlung und Bereiche danach;
- 11: Qualitätsfenster für Austenitanteil (für das Beispiel der Langsamkühlung gemäß der ersten Ausführungsform des erfindungsgemäßen Verfahrens, ansonsten für die Größe, die das Messgerät 9 misst);
- 12: Chemische Zusammensetzung des Produkts P;
- 13: Vorprozessdaten;
- 14: Vorhergesagter Austenitanteil;
- 15: Vorgaben für die geplante Fahrweise der Ofenvorrichtung 110;
- 16: Vorhergesagte Bandtemperaturen;
- 17: Vorhergesagte Bandtemperaturen;
- 18: Vorgaben für die geplante Fahrweise der Ofeneinrichtung 110
- 19: Ofenzonentemperaturen und Bandtemperaturen;
- 20: Bandtemperaturen (für Beispiel Bandtemperaturen außer der Langsamkühlung, d.h. z.B. Haltetemperatur, Heiztemperatur, Schnellkühlungstemperatur);
- 21: Vorsteuerwert für eine bestimmte Bandtemperatur, auf die der Regler für den Austenitanteil wirkt (für das Beispiel Bandtemperatur nach Langsamkühlung);
- 22: Reglerausgang des Reglers 7, der zu dem Vorsteuerwert 21 addiert wird. (für das Beispiel Bandtemperatur nach Langsamkühlung);
- 23: Qualitätsfenster für Austenitanteil (für das Beispiel der Langsamkühlung gemäß der ersten Ausführungsform des erfindungsgemäßen Verfahrens, ansonsten für die Größe, die das Messgerät 9 misst);
- 24: Vorgabe für Ofenzonentemperaturen (für Beispiel für Langsamkühlung und Bereiche davor);
- 25: Ofenzonentemperaturen und Bandtemperaturen;
- 26: Austenitanteil (von dem Röntgenmessgerät 9 gemessen); und
- 27: Vorgaben für Ofenzonentemperaturen (für Beispiel für Schnellkühlung und Bereiche danach, gemäß der zweiten Ausführungsform des erfindungsgemäßen Verfahrens).

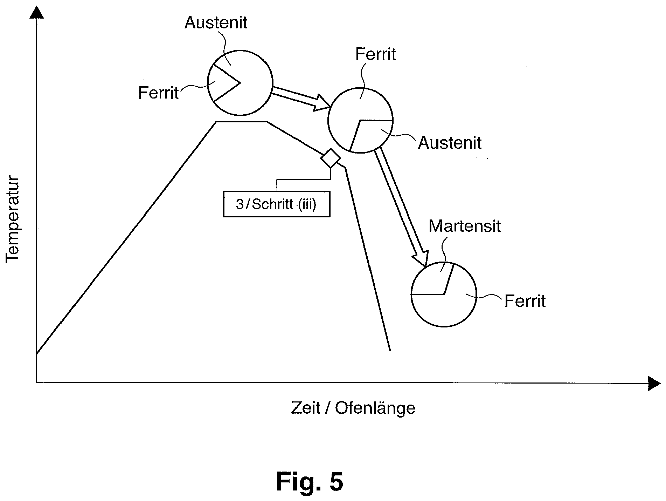

Nachfolgend ist eine Hauptvariante einer erste Ausführungsform des erfindungsgemäßen Verfahrens im Detail erläutert, die vorzugsweise für Dualphasenstähle oder Komplexphasenstähle durchgeführt wird. Der Temperaturverlauf für das Produkt P, der sich durch die Wärmebehandlung innerhalb der Bearbeitungslinie B einstellt, ist qualitativ in den Diagrammen von Fig. 4 und Fig. 5 gezeigt.

Wie bereits genannt, wird bei dem erfindungsgemäßen Verfahren das Produkt P zunächst bis zur ersten Stelle I erwärmt. Zweckmäßigerweise kann diese Erwärmung des Produkts P mit bzw. in der Ofeneinrichtung 110 erfolgen, wobei diese Erwärmung dem ansteigenden Teil zu Beginn des Temperaturverlaufs in dem Diagramm von Fig. 4 entspricht. Im Anschluss hieran wird das Produkt zwischen der ersten Stelle I und der zweiten Stelle II langsam abgekühlt, bevor dann das Produkt zwischen der zweiten Stelle II und der dritten Stelle III schnell abgekühlt wird.

Zur Verdeutlichung der vorstehend genannten Erwärmungs- bzw. Abkühlvorgänge für das Diagramm von Fig. 4 sind angrenzend an dessen Graph für den Temperaturverlauf mit I, II und III jeweils die erste, zweite und dritte Stelle bezeichnet. Hierbei verdeutlicht insbesondere die jeweils negative Steigung für den Temperaturverlauf zwischen den Stellen I-II und II-III, dass das Produkt hierzwischen abgekühlt wird.

Das Diagramm von Fig. 5 entspricht jenem von Fig. 4, wobei nun in Fig. 5 quantitativ durch entsprechende Kreissymbole die Anteile von Austenit, Ferrit und Martensit in der Mikrostruktur des Produkts P an den verschiedenen Stellen während der genannten Wärmebehandlung veranschaulicht sind.

Das Verfahren gemäß der ersten Ausführungsform zeichnet sich dadurch aus, dass für die Stelle II, an der die Langsamkühlung für das Produkt P beendet ist, ein Austenitanteil des Produkts P vorhergesagt wird. In Bezug auf diesen vorhergesagten Austenitanteil wird dann mit dem erfindungsgemäßen Verfahren überprüft, ob dieser Austenitanteil innerhalb eines gewünschten Sollbereichs liegt oder einem gewünschten Sollwert entspricht, wobei im Falle einer festgestellten Abweichung hiervon dann zumindest eine Zonentemperatur der Ofeneinrichtung 110 und/oder die Geschwindigkeit des Produkts in der Förderrichtung F angepasst und vorzugsweise geregelt wird, derart, dass damit der für die zweite Stelle II vorhergesagte Austenitanteil des Produkts P innerhalb eines gewünschten Qualitätsfensters für den Sollwert des Austenitanteils liegt.

Ergänzend zu den Abläufen, die sich bereits aus dem Blockdiagramm von Fig. 2 und der hierzu genannten Legende selbsterklärend ergeben, werden zur Durchführung des erfindungsgemäßen Verfahrens gemäß der ersten Ausführungsform folgende Hinweise gegeben:
In einem Schritt (i) wird für das Produkt P an der zweiten Stelle II ein Qualitätsfenster in Bezug auf den Austenitanteil bestimmt. Zur Bestimmung dieses Qualitätsfensters werden vorzugsweise auf Grundlage von labortechnisch ermittelten Messwerten des Produkts P ein maximaler Wert und ein minimaler Wert berechnet. Der Abstand zwischen dem maximalen Wert und dem minimalen Wert definiert dann das besagte Qualitätsfenster in Bezug auf den Austenitanteil des Produkts, welcher Anteil an der Stelle II (d.h. nach Abschluss der Langsamkühlung) vorliegen soll. Zweckmäßigerweise wird auch ein Sollwert bestimmt bzw. berechnet, der zwischen dem maximalen Wert und dem minimalen Wert und somit innerhalb des genannten Qualitätsfensters liegt.

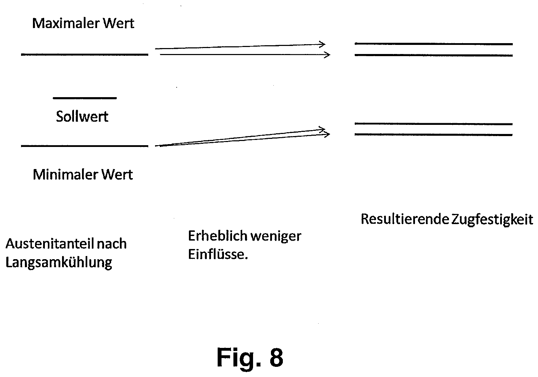

Das vorstehend genannte Qualitätsfenster für den Austenitanteil nach der Langsamkühlung ist auch in der Darstellung von Fig. 8 (im linken Bereich davon) gezeigt. Gleiches gilt auch für den Sollwert, der wie erläutert zwischen dem maximalen Wert und dem minimalen Wert liegt.

Zur Berechnung bzw. Bestimmung des vorstehend genannten Austenitanteils an der Stelle II ist die Steuer- und/oder Regeleinrichtung 100 mit einem Block 1 (z.B. ein Modell bzw. Programm) nach Fig. 2 für die Austenitanteilberechnung ausgestattet, der einen Block zur Vorhersage des Austenitanteils umfasst. Durch den Pfeil 11, der in Richtung des Blocks 3 weist, ist symbolisiert, dass für die Vorhersage des Austenitanteils das zuvor bestimmte Qualitätsfenster für den Austenitanteil berücksichtigt wird.

In einem Schritt (ii) des Verfahrens nach der ersten Ausführungsform wird eine Temperatur für das Produkt P an der zweiten Stelle II vorhergesagt, indem - in an sich bekannter Weise - eine Wärmeübertragungsgleichung gelöst wird. Wie vorstehend bereits in anderer Stelle erläutert, kann diese Vorhersage der Temperaturen für das Produkt P auch durch abgespeicherte Messungen durchgeführt werden. Jedenfalls erfolgt diese Temperaturvorhersage in Abhängigkeit von einer Temperatur des Produkts P an einer der zweiten Stelle II vorgelagerten Position z.B. in der Bearbeitungslinie B. Zu diesem Zweck ist die Steuer- und/oder Regeleinrichtung 100 mit einem Block 2 (z.B. Modell bzw. Programm) für die Bandtemperaturberechnung ausgestattet. Hierbei erfolgt die Vorhersage der Temperaturen für das Produkt P (in Fig. 2 auch als "Bandtemperaturen" bezeichnet) durch den Block 5, wobei dann die hiermit vorhergesagten Bandtemperaturen einerseits, in Fig. 2 durch den Pfeil "16" symbolisiert, an den Block3 übergeben werden, und andererseits, in Fig. 2 durch den Pfeil "17" symbolisiert, an einen Block übergeben werden, der in Fig. 2 mit dem Bezugszeichen "4" (gemäß der Legende zu Fig. 2: "Vorgabe Bandtemperaturen") übergeben werden.

Nachdem der Block3 die Daten für die an der Stelle II vorhergesagten Bandtemperaturen erhalten hat, wird mit diesem Block 3 unter Anwendung eines metallurgischen und/oder datenbasierten Modells auf Grundlage der gemäß Schritt (ii) vorhergesagten Temperatur nun in einem Schritt (iii) der Austenitanteil des Produkts an der zweiten Stelle II vorhergesagt. Dies ist bei der Kurve für den Temperaturverlauf von Fig. 4 auch durch die Bezeichnung "3/Schritt (iii)" angedeutet, die am Ende der Langsamkühlung genannt ist. Der somit vorhergesagte Austenitanteil, in Fig. 2 durch den Pfeil "14" symbolisiert, wird von dem Block3 an den Block 4 übergeben, der gemäß der Legende zu Fig. 2 mit "Vorgabe Bandtemperaturen" bezeichnet ist.

Im Anschluss hieran wird in einem Schritt (iv) von dem erfindungsgemäßen Verfahren gemäß der ersten Ausführungsform überprüft, ob der vorhergesagte Austenitanteil außerhalb des Qualitätsfenster gemäß Schritt (i) liegt. Falls dies der Fall sein sollte, erfolgt das bereits genannte Anpassen von zumindest einer Zonentemperatur der Ofeneinrichtung 110 und/oder der Geschwindigkeit des Produkts in der Förderrichtung F. Dies geschieht vorzugsweise nach Art einer Regelung. Dies erfolgt mit Hilfe des Blocks 4, wie nachstehend erläutert.

Für die erste Ausführungsform des erfindungsgemäßen Verfahrens ist im Zuge des Schritts (iv) dann weiter vorgesehen, dass von dem Block4 ein Vorsteuerwert, in Fig. 2 mit "21" bezeichnet, an den Regler 6 für die Zonentemperaturen der Ofeneinrichtung 110 gesendet wird.

Mit dem Pfeil "23" ist in der Fig. 2 symbolisiert, dass hierbei der Regler 7 Informationen bzw. Daten zum Qualitätsfenster für den (an der Stelle II vorhergesagten) Austenitanteil erhält. Mit "22" ist in der Fig. 2 der Reglerausgang bezeichnet, der zu dem genannten Vorsteuerwert 21 addiert wird.

Jedenfalls erfolgt bei der ersten Ausführungsform des erfindungsgemäßen Verfahrens die Regelung von gezielten Zonentemperaturen der Ofeneinrichtung 110 und/oder der Geschwindigkeit des Produkts in der Förderrichtung F insbesondere durch den Einsatz des Reglers 7 derart, dass damit der für die Stelle II vorhergesagte Austenitanteil des Produkts P innerhalb des besagten Qualitätsfenster von Schritt (i) zurückgelangt bzw. darin verbleibt. Optimalerweise entspricht hierbei der für die Stelle II vorhergesagte Austenitanteil dem zugehörigen Sollwert, der innerhalb des Qualitätsfenster zwischen dem maximalen Wert und dem minimalen Wert liegt (vgl. auch Fig. 8), oder der vorhergesagte Austenitanteil weist zu diesem Sollwert einen lediglich kleinen Abstand auf.

Fig. 8 zeigt eine symbolische Darstellung für eine Änderung der mechanischen Eigenschaften des Produkts P, am Beispiel der resultierenden Zugfestigkeit, wenn es mit dem erfindungsgemäßen Verfahren nach der ersten Ausführungsform wärmebehandelt worden ist. Ein Vergleich mit der Fig. 10 verdeutlicht, dass es mithilfe der vorliegenden Erfindung möglich ist, die Auswirkungen von Einflüssen z.B. auf die resultierende Zugfestigkeit gegenüber dem Stand der Technik zu reduzieren.

In Bezug auf die Blöcke 3, 4 und 5 wird hervorgehoben, dass hierfür eine Berechnungsgeschwindigkeit schneller als in Echtzeit gewählt bzw. eingestellt ist. Mutatis mutandis gilt dies auch für die Schritte (ii) und (iii) des erfindungsgemäßen Verfahrens.

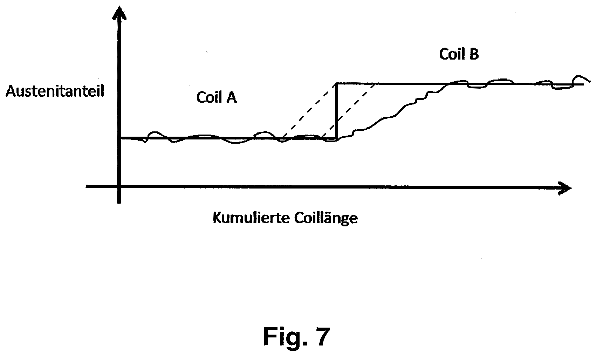

Die Blöcke 3, 4, 5 und 6 sowie der Regler 7 werden zweckmäßigerweise permanent im Hintergrund zur Wärmebehandlung, die für das Produkt P mit der Ofeneinrichtung 110 durchgeführt wird, und somit fortwährend betrieben. Hierdurch ist es für die vorliegende Erfindung möglich, insbesondere bei einem anstehenden Coilwechsel eine vorteilhaft kurze Reaktionszeit im Hinblick auf mögliche Änderungen von Eingangsparametern zu erreichen, indem z.B. die Ansteuerung der Ofeneinrichtung 110 bzw. die Bandgeschwindigkeit frühzeitig angepasst wird. Eine solche frühe Reaktion, die mit der erfindungsgemäßen Regelung in Abhängigkeit von dem vorhergesagten Austenitanteil an der Stelle II erzielt wird, ist in dem Diagramm von Fig. 7 durch die gestrichelten Bereiche des Austenitanteils als Funktion der kumulierten Coillänge symbolisiert, im Zusammenhang mit dem Wechsel von einem Coil A zu einem Coil B.

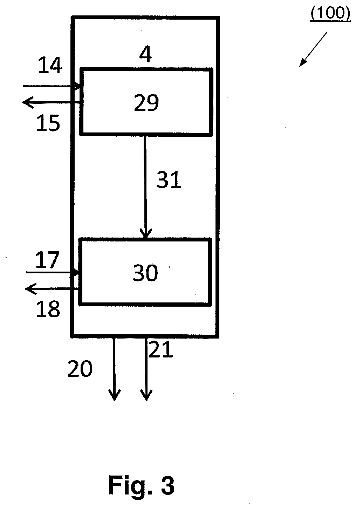

In der Fig. 3 ist ein modifizierter Teil der Steuer- und/oder Regeleinrichtung 100 von Fig. 2 gezeigt, in Bezug auf den Block 4. Mit dieser Modifikation des Blocks wird ebenfalls die erste Ausführungsform des erfindungsgemäßen Verfahrens durchgeführt, wobei von Austenitqualitätsfenster auf dynamische Temperaturqualitätsfenster geschlossen wird. Zur Erläuterung der Fig. 3 wird hierzu folgende ergänzende Legende genannt:
- 29: Vorgabe für Qualitätsfenster für Bandtemperaturen (für Beispiel für die Langsamkühlung gemäß der ersten Ausführungsform)
- 30: Vorgabe Bandtemperaturen
- 31: Qualitätsfenster für Bandtemperaturen (für Beispiel für die Langsamkühlung gemäß der ersten Ausführungsform)

Die modifizierte erste Ausführungsform des erfindungsgemäßen Verfahrens entspricht im Wesentlichen der zuvor erläuterten Hauptvariante der ersten Ausführungsform, wobei nun die Vorgabe der Bandtemperaturen (4) in der folgenden Weise geschieht: Für den Austenitanteil werden Qualitätsfenster definiert. Diese sind abgeleitet aus Qualitätsfenstern für die mechanischen Eigenschaften. Zusätzlich erfolgen folgende Schritte:
- Es werden Qualitätsfenster für die Langsamkühlungsbandtemperatur aus den Austenitqualitätsfenstern und der Vorhersage für die Austenitanteile bestimmt (29).
- Fenster für Glühtemperatur ist normales Fenster oder kann angepasst werden durch die Anforderung an den Austenitanteil, bzw. die Kapazität der Langsamkühlung über (31)
- Diese dynamischen Qualitätsfenster werden dann in der Vorgabe der Bandtemperaturen (30) genutzt.

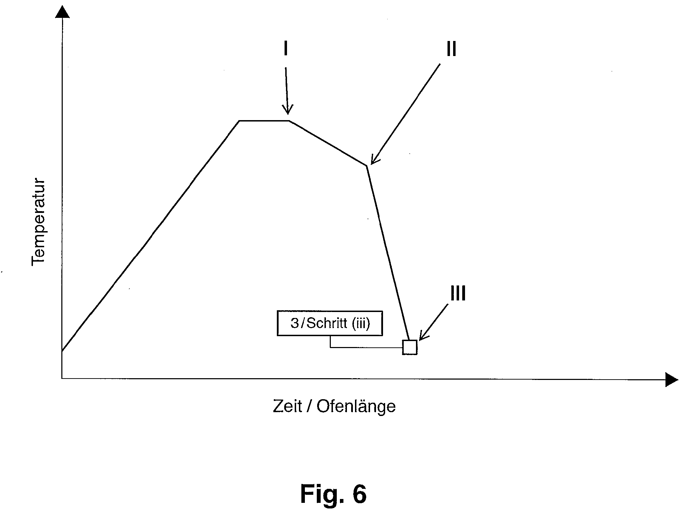

Eine zweite Ausführungsform für das erfindungsgemäße Verfahren ist in Bezug auf einen möglichen Temperaturverlauf als Funktion der Zeit bzw. Ofenlänge in dem Diagramm von Fig. 6 dargestellt. Diese zweite Ausführungsform wird vorzugsweise für Quench- und Partitioning-Stähle ("Q&P-Stähle") durchgeführt und zeichnet sich dadurch aus, dass der Schritt (iii) zur Vorhersage des Austenitanteils erst nach Abschluss der Schnellkühlung und somit an der dritten Stelle durchgeführt wird. Dies ist für die Kurve des Temperaturverlaufs in dem Diagramm von Fig. 6 durch die Positionierung der Bezeichnung "3/Schritt (iii) an der Stelle III entsprechend gezeigt. Des Weiteren versteht sich, dass auch bei den übrigen Schritten (i), (ii) und (iv) des Verfahrens gemäß dieser zweiten Ausführungsform jeweils ausschließlich auf die dritte Stelle in Bezug auf den Austenitanteil bzw. die hierzu erforderliche vorhergesagte Temperatur abgestellt wird.

An dieser Stelle wird gesondert darauf hingewiesen, dass der Temperaturverlauf, der sich bei dem Verfahren nach der zweiten Ausführungsform für das Produkt P einstellt, auch von dem Verlauf von Fig. 6 abweichen kann. Beispielsweise ist es möglich, dass bei der zweiten Ausführungsform ein Langsamkühlung zwischen der ersten Stelle I und der zweiten Stelle I entweder in veränderter Form durchgeführt wird, oder gar nicht stattfindet. Letzterenfalls bedeutet dies, dass im Anschluss an die Erwärmung des Produkts P bis zur ersten Stelle I dann direkt eine Schnellkühlung bis zur dritten Stelle III erfolgt, wobei eine zweite Stelle für diesen Fall nicht vorkommt bzw. ohne Bedeutung bleibt.

Ansonsten entspricht der Ablauf des Verfahrens nach der zweiten Ausführungsform mutatis mutandis der Hauptvariante der ersten Ausführungsform, so dass zur Vermeidung von Wiederholungen hierauf verwiesen werden darf.

Die vorliegende Erfindung eignet sich insbesondere zum Einsatz in Verzinkungslinien, Glühlinien oder ähnlichen Anlagen, in denen ein metallisches Produkt insbesondere in Form eines Bands oder Blechs einer Wärmebehandlung unterzogen wird, wobei das Produkt gezielt erwärmt und/oder abgekühlt wird. Dies bedeutet, dass es sich bei der vorstehend genannten Bearbeitungslinie B um eine Verzinkungslinie oder Glühlinie handeln kann.

Falls eine Erwärmung des Produkts P, die wie erläutert bis zur ersten Stelle I durchgeführt wird, in kurzer Zeit erfolgen soll mit einem entsprechend großen Temperaturgradienten, kann für die Erfindung vorgesehen sein, dass hierzu auch der Induktor 112 (vgl. Fig. 1) eingesetzt wird. In dieser Weise wird der Induktor 112 für die vorliegende Erfindung als schnelle Stellgröße benutzt. Für das Aufwärmen nach dem Prinzip der Induktion ist von Vorteil, dass die in das metallische Produkt P eingebrachte Energie schnell geändert werden kann.

Schließlich wird im Hinblick auf eine Durchführung eines Verfahrens nach der vorliegenden Erfindung darauf hingewiesen, dass der Austenitanteil für das Produkt P an der zweiten Stelle II (bei der ersten Ausführungsform) oder an der dritten Stelle III (bei der zweiten Ausführungsform) auch messtechnisch ermittelt wird, vorzugsweise zerstörungsfrei durch Verwendung von Röntgenstrahlung. Das Ergebnis dieser Messung wird dann an den Regler 7 gesendet und dient dazu, die für die zweite Stelle II bzw. dritte Stelle III vorhergesagten Werte zu verifizieren und im Falle einer Abweichung auszuregeln. Dies kommt in dem Blockdiagramm von Fig. 2 durch den Block "9" zum Ausdruck, dessen Signalausgang mit dem Pfeil "26" auf den Block des Reglers 7 gerichtet ist.

## Patentansprüche

1. Verfahren zur Wärmebehandlung eines metallischen Produkts (P), bei dem das Produkt (P) durch eine mittels einer Regeleinrichtung (100) geregelte Ofeneinrichtung (110) mit einer vorbestimmten Geschwindigkeit in einer Förderrichtung (F) hindurchgeführt wird, wobei das Produkt (P) bis zu einer ersten Stelle (I) erwärmt und im Anschluss daran bis zu einer zweiten Stelle (II) oder bis zu einer dritten Stelle (III) abgekühlt wird, wobei die zweite bzw. dritte Stelle - in Förderrichtung (F) des Produkts (P) gesehen - jeweils der ersten Stelle (I) nachgelagert sind,
**gekennzeichnet durch** die weiteren Schritte:
(i) Bestimmen eines Qualitätsfensters für das Produkt (P) an der zweiten Stelle (II) oder an der dritten Stelle (III) in Bezug auf den Austenitanteil, wobei das Qualitätsfenster durch einen minimalen Wert und einen maximalen Wert definiert ist, wobei der minimale und der maximale Wert in Bezug auf den Austenitanteil aus zumindest einer messtechnisch und/oder labortechnisch ermittelten mechanischen Eigenschaften des Produkts (P) abgeleitet wird,
(ii) Vorhersagen einer Temperatur für das Produkt (P) an der zweiten Stelle (II) oder an der dritten Stelle (III) durch Lösen einer Wärmeübertragungsgleichung in Abhängigkeit von einer Temperatur des Produkts (P) an einer der zweiten Stelle (II) oder der dritten Stelle (III) vorgelagerten Position und/oder in Abhängigkeit von der Geschwindigkeit des Produkts (P),
(iii) Vorhersagen des Austenitanteils des Produkts (P) an der zweiten Stelle (II) oder an der dritten Stelle (III) mittels eines datenbasierten Modells auf Grundlage der gemäß Schritt (ii) vorhergesagten Temperatur, und
(iv) falls ein für die zweite Stelle (II) oder dritte Stelle (III) vorhergesagter Austenitanteil des Produkts (P) gemäß Schritt (iii) außerhalb des Qualitätsfensters von Schritt (i) liegt: Anpassen der Geschwindigkeit des Produkts (P) in der Förderrichtung (F) mittels der Regeleinrichtung (100), derart, dass damit der für die zweite oder dritte Stelle vorhergesagte Austenitanteil des Produkts (P) innerhalb des Qualitätsfensters gelangt bzw. liegt, wobei die Geschwindigkeit des Produkts (P) in der Förderrichtung (F) für die Regeleinrichtung (100) als Stellgröße dient.

2. Verfahren nach Anspruch 1, **dadurch gekennzeichnet, dass** die Berechnungsgeschwindigkeit für den Schritt (ii) und/oder für den Schritt (iii) schneller als in Echtzeit gewählt ist.

3. Verfahren nach Anspruch 1 oder 2, **dadurch gekennzeichnet, dass** gemäß Schritt (iv) ein Anpassen von zumindest einer Zonentemperatur der Ofeneinrichtung (110) nach Art einer Regelung mittels der Regeleinrichtung (100) zusätzlich zum Anpassen der Geschwindigkeit in der Förderrichtung erfolgt, derart, dass damit der für die zweite oder dritte Stelle vorhergesagte Austenitanteil des Produkts (P) innerhalb des Qualitätsfensters gelangt bzw. liegt, wobei eine Zonentemperatur der Ofeneinrichtung (110) für die Regeleinrichtung (100) als Stellgröße dient.

4. Verfahren nach einem der vorhergehenden Ansprüche, **dadurch gekennzeichnet, dass** es sich bei der mechanischen Eigenschaft des Produkts (P) um die Zugfestigkeit und/oder Streckgrenze und/oder Dehnung handelt.

5. Verfahren nach einem der vorhergehenden Ansprüche, **dadurch gekennzeichnet, dass** für das Produkt (P) ein Austenit-Sollwert bestimmt wird, der innerhalb des Qualitätsfensters gemäß Schritt (i) liegt, vorzugsweise, dass der Sollwert auf Grundlage eines messtechnisch bestimmten Wertes berechnet wird.

6. Verfahren nach Anspruch 5, **dadurch gekennzeichnet, dass** das Anpassen gemäß Schritt (iv) derart erfolgt, dass der für die zweite Stelle (II) oder für die dritte Stelle (III) vorhergesagte Austenitanteil des Produkts (P) mit dem Austenit-Sollwert übereinstimmt.

7. Verfahren nach einem der vorhergehenden Ansprüche, **dadurch gekennzeichnet, dass** eine zweite Stelle (II) - in Förderrichtung (F) des Produkts (P) gesehen - sich zwischen der ersten Stelle (I) und der dritten Stelle (III) befindet, wobei das Produkt (P) zwischen der ersten Stelle (I) und der zweiten Stelle (II) langsam gekühlt wird und zwischen der zweiten Stelle (II) und der dritten Stelle (III) schnell gekühlt wird.

8. Verfahren nach Anspruch 7, **dadurch gekennzeichnet, dass** es sich bei dem Produkt (P) um einen Stahl handelt, der einen Massenanteil an Silizium von zumindest 0,3% und einen Massenanteil an Mangan von zumindest 1% aufweist.

9. Verfahren nach Anspruch 8, **dadurch gekennzeichnet, dass** der Massenanteil an Silizium zumindest 0,3 %, 0,31 %, 0,32 %, 0,33 %, 0,34 %, 0,35 %, 0,36 %, 0,37 %, 0,38 %, 0,39 %, 0,4 %, 0,41 %, 0,42 %, 0,43 %, 0,44 %, 0,45 %, 0,46 %, 0,47 %, 0,48 %, 0,49 %, 0,5 %, 0,51 %, 0,52 %, 0,53 %, 0,54 %, 0,55 %, 0,56 %, 0,57 %, 0,58 %, 0,59 %, 0,6%, 0,61 %, 0,62 %, 0,63 %, 0,64 %, 0,65 %, 0,66 %, 0,67 %, 0,68 %, 0,69 %, 0,7 %, 0,71 %, 0,72 %, 0,73 %, 0,74 %, 0,75 %, 0,76 %, 0,77 %, 0,78 %, 0,79 %, 0,8 %, 0,81 %, 0,82 %, 0,83 %, 0,84%, 0,85 %, 0,86 %, 0,87 %, 0,88%, 0,89%, 0,9 %, 0,91 %, 0,92 %, 0,93 %, 0,94 %, 0,95 %, 0,96 %, 0,97 %, 0,98 %, 0,99 %, 1% oder bis zu 1,5 % beträgt.

10. Verfahren nach Anspruch 8 oder 9, **dadurch gekennzeichnet, dass** der Massenanteil an Mangan zumindest 1,01 %, 1,02 %, 1,03 %, 1,04 %, 1,05 %, 1,06 %, 1,07 %, 1,08 %, 1,09 %, 1,1 %, 1,11 %, 1,12 %, 1,13 %, 1,14%, 1,15 %, 1,16 %, 1,17 %, 1,18 %, 1,19 %, 1,2 %, 1,21 %, 1,22 %, 1,23 %, 1,24 %, 1,25 %, 1,26 %, 1,27 %, 1,28 %, 1,29 %, 1,3 %, 1,31 %, 1,32 %, 1,33 %, 1,34 %, 1,35 %, 1,36 %, 1,37 %, 1,38 %, 1,39 %, 1,4 %, 1,41 %, 1,42 %, 1,43 %, 1,44 %, 1,45 %, 1,46 %, 1,47 %, 1,48 %, 1,49 %, 1,5 %, 1,51 % oder bis zu 2% beträgt.

11. Verfahren nach einem der Ansprüche 8 bis 10, **dadurch gekennzeichnet, dass** die Summe der Massenanteile an Silizium und Mangan zumindest 1,3 % beträgt, vorzugsweise, dass die Summe der Massenanteile an Silizium und Mangan zumindest 1,31 %, 1,32 %, 1,33 %, 1,34 %, 1,35 %, 1,36 %, 1,37 %, 1,38 %, 1,39 %, 1,40 %, 1,41 %, 1,42 %, 1,43 %, 1,44 %, 1,45 %, 1,46 %, 1,47 %, 1,48 %, 1,49 %, 1,50 %, 1,51 %, 1,52 %, 1,53 %, 1,54 %, 1,55 %, 1,56 %, 1,57 %, 1,58 %, 1,59 %, 1,6 %, 1,61 %, 1,62 %, 1,63 %, 1,64 %, 1,65 %, 1,66 %, 1,67 %, 1,68 %, 1,69 %, 1,7 %, 1,71 %, 1,72 %, 1,73 %, 1,74 %, 1,75 %, 1,76 %, 1,77 %, 1,78 %, 1,79 %, 1,8 %, 1,81 %, 1,82 %, 1,83 %, 1,4 %, 1,5 %, 1,86 %, 1,87 %, 1,88 %, 1,89 %, 1,9 %, 1,91 %, 1,92 %, 1,93 %, 1,94 %, 1,95 %, 1,96 %, 1,97 %, 1,98 %, 1,99 %, 2 %, 2,01 % oder bis zu 2,5% beträgt.

12. Verfahren nach einem der Ansprüche 7 bis 11, **dadurch gekennzeichnet, dass** für die Durchführung der Schritte (i) bis (iv) jeweils der Austenitanteil des Produkts (P) an der zweiten Stelle (II) berücksichtigt wird.

13. Verfahren nach einem der Ansprüche 7 bis 12, **dadurch gekennzeichnet, dass** das Anpassen gemäß Schritt (iv) unter Berücksichtigung einer Kapazität der zwischen der ersten Stelle (I) und der zweiten Stelle (II) durchgeführten Kühlung erfolgt.

14. Verfahren nach einem der vorhergehenden Ansprüche, **dadurch gekennzeichnet, dass** zur Wärmebehandlung des Produkts (P) zumindest ein Induktor (112) vorgesehen ist, der von der Regeleinrichtung (100) gesteuert oder geregelt wird, wobei der Induktor (112) entweder innerhalb der Ofeneinrichtung (110) und/oder - in der Förderrichtung (F) des Produkts (P) gesehen - stromaufwärts und/oder stromabwärts von der Ofeneinrichtung (110) angeordnet ist, vorzugsweise, dass es sich bei dem Induktor (112) um einen transversalen Induktor handelt

15. Verfahren nach einem der vorhergehenden Ansprüche, **dadurch gekennzeichnet, dass** der Austenitanteil für das Produkt (P) an der zweiten Stelle (II) und/oder an der dritten Stelle (III) messtechnisch ermittelt wird, vorzugsweise, dass die Messung des Austenitanteils an der zweiten Stelle (II) und/oder an der dritten Stelle (III) zerstörungsfrei insbesondere durch Verwendung von Röntgenstrahlung (9) erfolgt.

16. Verfahren nach einem der vorhergehenden Ansprüche, **dadurch gekennzeichnet, dass** für das Produkt (P) insbesondere an einer zweiten Stelle (II) bzw. dritten Stelle (III) ein Coilwechsel bevorsteht.

17. Verfahren nach einem der vorhergehenden Ansprüche, **dadurch gekennzeichnet, dass** im Schritt (iii) das Vorhersagen des Austenitanteils des Produkts (P) an der zweiten Stelle (II) oder an der dritten Stelle (III) auch mittels eines metallurgischen Modells auf Grundlage der gemäß Schritt (ii) vorhergesagten Temperatur erfolgt.

## Claims

1. Method for heat treatment of a metallic product (P), in which the product (P) is led through a furnace device (110), which is regulated by means of a regulating device (100), at a predetermined speed in a conveying direction (F), wherein the product (P) is heated until reaching a first location (I) and subsequently thereto is cooled until reaching a second location (II) or a third location (III), wherein the second or third location as viewed in the conveying direction (F) of the product (P) is each downstream of the first location (I), **characterised by** the further steps of:
(i) determining a quality window for the product (P) at the second location (II) or at the third location (III) with respect to the austenite fraction, wherein the quality window is defined by a minimum value and a maximum value, wherein the minimum value and maximum value with respect to the austenite fraction are derived from at least one mechanical property of the product (P) determined by measurement and/or in the laboratory,
(ii) predicting a temperature for the product (P) at the second location (II) or at the third location (III) by solving a heat transfer equation as a function of a temperature of the product (P) at a position upstream of one of the second location (II) or the third location (III) and/or in dependence on the speed of the product (P),
(iii) predicting the austenite fraction of the product (P) at the second location (II) or at the third location (III) by means of a data-based model on the basis of the temperature predicted according to step (ii), and
(iv) if an austenite fraction of the product (P) predicted for the second location (II) or third location (III) according to step (iii) lies outside the quality window of step (i): adaptation of the speed of the product (P) in the conveying direction (F) by means of the regulating device (100) in such a way that the austenite fraction of the product (P) predicted for the second or third location comes to lie or lies within the quality window, wherein the speed of the product (P) in the conveying direction serves as a setting variable for the regulating device (100).

2. Method according to claim 1, **characterised in that** the computing speed for step (ii) and/or for step (iii) is selected to be faster than in real time.

3. Method according to claim 1, **characterised in that** according to step (iv) an adaptation of at least one zone temperature of the furnace device (110) is carried out in the manner of a regulation by means of the regulating device (100) additionally to the adaptation of the speed in the conveying direction in such a way that the austenite fraction of the product (P) predicted for the second or third location thereby comes to lie or lies within the quality window, wherein a zone temperature of the furnace device (110) serves as a setting variable for the regulating device (100).

4. Method according to any one of the preceding claims, **characterised in that** the mechanical property of the product (P) is the tensile strength and/or yield point and/or elongation.

5. Method according to any one of the preceding claims, **characterised in that** an austenite target value lying within the quality window according to step (i) is determined for the product (P), the target value preferably being calculated on the basis of a measured value.

6. Method according to claim 5, **characterised in that** the adaptation according to step (iv) takes place in such a way that the austenite fraction of the product (P) predicted for the second location (II) or for the third location (III) corresponds with the austenite target value.

7. Method according to any one of the preceding claims, **characterised in that** a second location (II) as viewed in the conveying direction (F) of the product (P) is located between the first location (I) and the third location (III), wherein the product (P) is slowly cooled between the first location (I) and the second location (II) and rapidly cooled between the second location (II) and the third location (III).

8. Method according to claim 7, **characterised in that** the product (P) is a steel which has a mass fraction of silicon of at least 0.3% and a mass fraction of manganese of at least 1%.

9. Method according to claim 8, **characterised in that** the mass fraction of silicon is at least 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6%, 0.61%, 0.62%, 0.63%, 0.64%, 0.65%, 0.66%, 0.67%, 0.68%, 0.69%, 0.7%, 0.71%, 0.72%, 0.73%, 0.74%, 0.75%, 0.76%, 0.77%, 0.78%, 0.79%, 0.8%, 0.81%, 0.82%, 0.83%, 0.84%, 0.85%, 0.86%, 0.87%, 0.88%, 0.89%, 0.9%, 0.91%, 0.92%, 0.93%, 0.94%, 0.95%, 0.96%, 0.97%, 0.98%, 0.99%, 1% or up to 1.5%.

10. Method according to claim 8 or claim 9, **characterised in that** the mass fraction of manganese is at least 1.01%, 1.02%, 1.03%, 1.04%, 1.05%, 1.06%, 1.07%, 1.08%, 1.09%, 1.1%, 1.11%, 1.12%, 1.13%, 1.14%, 1.15%, 1.16%, 1.17%, 1.18%, 1.19%, 1.2%, 1.21%, 1.22%, 1.23%, 1.24%, 1.25%, 1.26%, 1.27%, 1.28%, 1.29%, 1.3%, 1.31%, 1.32%, 1.33%, 1.34%, 1.35%, 1.36%, 1.37%, 1.38%, 1.39%, 1.4%, 1.41%, 1.42%, 1.43%, 1.44%, 1.45%, 1.46% 1.47%, 1.48%, 1.49%, 1.5%, 1.51 % or up to 2%.

11. Method according to any one of claims 8 to 10, **characterised in that** the sum of the mass fractions of silicon and manganese is at least 1.3%, the sum of the mass fractions of silicon and manganese preferably being at least 1.31%, 1.32%, 1.33%, 1.34%, 1.35%, 1.36%, 1.37%, 1.38%, 1.39%, 1.40%, 1.41%, 1.42%, 1.43%, 1.44%, 1.45%, 1.46%, 1.47%, 1.48%, 1.49%, 1.50%, 1.51%, 1.52%, 1.53%, 1.54%, 1.55%, 1.56%, 1.57%, 1.58%, 1.59%, 1.6%, 1.61%, 1.62%, 1.63%, 1.64%, 1.65%, 1.66%, 1.67%, 1.68%, 1.69%, 1.7%, 1.71%, 1.72%, 1.73%, 1.74%, 1.75%, 1.76%, 1.77%, 1.78%, 1.79%, 1.8%, 1.81%, 1.82%, 1.83%, 1.4%, 1.5%, 1.86%, 1.87%, 1.88%, 1.89%, 1.9%, 1.91%, 1.92%, 1.93%, 1.94%, 1.95%, 1.96%, 1 , 97%, 1.98%, 1.99%, 2%, 2.01 % or up to 2.5%.

12. Method according to any one of claims 7 to 11, **characterised in that** the austenite fraction of the product (P) at the second location point (II) is taken into account for carrying out steps (i) to (iv).

13. Method according to any one of claims 7 to 12, **characterised in that** the adaptation according to step (iv) is carried out taking into account a capacity of the cooling performed between the first location (I) and the second location (II).

14. Method according to any one of the preceding claims, **characterised in that** for the heat treatment of the product (P) at least one inductor (112) is provided, which is controlled or regulated by the regulating device (100), wherein the inductor (112) is arranged either inside the furnace device (110) and/or as viewed in the conveying direction (F) of the product (P) upstream and/or downstream of the furnace device (110), the inductor (112) preferably being a transverse inductor.

15. Method according to any one of the preceding claims, **characterised in that** the austenite fraction for the product (P) at the second location (II) and/or at the third location (III) is determined by measurement, the measurement of the austenite fraction at the second location (II) and/or at the third location (III) preferably being carried out nondestructively, in particular through the use of X-rays (9).

16. Method according to any one of the preceding claims, **characterised in that** a coil change is imminent for the product (P), in particular at a second location (II) or third location (III).

17. Method according to any one of the preceding claims, **characterised in that** in the step (iii) the prediction of the austenite fraction of the product (P) at the second location (II) or at the third location (III) is also carried out by means of a metallurgical model on the basis of the temperature predicted in accordance with step (ii).

## Revendications

1. Procédé de traitement thermique d'un produit métallique (P), dans lequel le produit (P) est passé à travers un four (110) régulé au moyen d'un dispositif de régulation (100) à une vitesse prédéterminée dans une direction de transport (F), le produit (P) étant chauffé jusqu'à un premier emplacement (I) et ensuite refroidi jusqu'à un deuxième emplacement (II) ou jusqu'à un troisième emplacement (III), le deuxième ou le troisième emplacement - vu dans la direction de transport (F) du produit (P) - étant situés respectivement en aval du premier emplacement (I), **caractérisé par** les étapes supplémentaires suivantes consistant à :
(i) déterminer une fenêtre de qualité pour le produit (P) au deuxième emplacement (II) ou au troisième emplacement (III) en ce qui concerne la teneur en austénite, la fenêtre de qualité étant définie par une valeur minimale et une valeur maximale, les valeurs minimale et maximale en ce qui concerne la teneur en austénite étant déduites d'au moins une propriété mécanique du produit (P) déterminée par des techniques de mesure et/ou de laboratoire,
(ii) prédire une température pour le produit (P) au deuxième emplacement (II) ou au troisième emplacement (III) en résolvant une équation de transfert de chaleur en fonction d'une température du produit (P) à une position en amont du deuxième emplacement (II) ou du troisième emplacement (III) et/ou en fonction de la vitesse du produit (P),
(iii) prédire la teneur en austénite du produit (P) au deuxième emplacement (II) ou au troisième emplacement (III) au moyen d'un modèle basé sur des données, sur la base de la température prédite selon l'étape (ii), et
(iv) si une teneur en austénite du produit (P) prédite pour le deuxième emplacement (II) ou le troisième emplacement (III) selon l'étape (iii) se trouve en dehors de la fenêtre de qualité de l'étape (i) : ajuster la vitesse du produit (P) dans la direction de transport (F) au moyen du dispositif de régulation (100) de telle sorte que la teneur en austénite du produit (P) prédite pour le deuxième ou le troisième emplacement se trouve à l'intérieur de la fenêtre de qualité, la vitesse du produit (P) dans la direction de transport (F) servant de grandeur de réglage pour le dispositif de régulation (100).

2. Procédé selon la revendication 1, **caractérisé en ce que** la vitesse de calcul pour l'étape (ii) et/ou pour l'étape (iii) est choisie pour être plus rapide qu'en temps réel.

3. Procédé selon la revendication 1 ou 2, **caractérisé en ce que**, selon l'étape (iv), une adaptation d'au moins une température de zone du four (110) est effectuée à la manière d'une régulation au moyen du dispositif de régulation (100) en plus de l'adaptation de la vitesse dans la direction de transport, de telle sorte que la teneur en austénite du produit (P) prédite pour le deuxième ou le troisième emplacement se trouve à l'intérieur de la fenêtre de qualité, une température de zone du four (110) servant de grandeur de réglage pour le dispositif de régulation (100).

4. Procédé selon l'une des revendications précédentes, **caractérisé en ce que** la propriété mécanique du produit (P) est la résistance à la traction et/ou la limite d'élasticité et/ou l'allongement.

5. Procédé selon l'une des revendications précédentes, **caractérisé en ce que** l'on détermine pour le produit (P) une valeur de consigne de l'austénite qui se situe à l'intérieur de la fenêtre de qualité selon l'étape (i), de préférence **en ce que** la valeur de consigne est calculée sur la base d'une valeur déterminée par la technique de mesure.

6. Procédé selon la revendication 5, **caractérisé en ce que** l'adaptation selon l'étape (iv) est effectuée de telle sorte que la teneur en austénite du produit (P) prédite pour le deuxième emplacement (II) ou pour le troisième emplacement (III) coïncide avec la valeur de consigne de l'austénite.

7. Procédé selon l'une des revendications précédentes, **caractérisé en ce qu'**un deuxième emplacement (II) - vu dans la direction de transport (F) du produit (P) - est situé entre le premier emplacement (I) et le troisième emplacement (III), le produit (P) étant refroidi lentement entre le premier emplacement (I) et le deuxième emplacement (II) et étant refroidi rapidement entre le deuxième emplacement (II) et le troisième emplacement (III).

8. Procédé selon la revendication 7, **caractérisé en ce que** le produit (P) est un acier présentant une teneur massique en silicium d'au moins 0,3% et une teneur massique en manganèse d'au moins 1%.

9. Procédé selon la revendication 8, **caractérisé en ce que** le pourcentage en masse de silicium est d'au moins 0,3 %, 0,31 %, 0,32 %, 0,33 %, 0,34 %, 0,35 %, 0,36 %, 0,37 %, 0,38 %, 0,39 %, 0,4 %, 0,41 %, 0,42 %, 0,43 %, 0,44 %, 0,45 %, 0,46 %, 0,47 %, 0,48 %, 0,49 %, 0,5 %, 0,51 %, 0,52 %, 0,53 %, 0,54 %, 0,55 %, 25 0,56 %, 0,57 %, 0,58 %, 0,59 %, 0,6%, 0,61 %, 0,62 %, 0,63 %, 0,64 %, 0,65 %, 0,66 %, 0,67 %, 0,68 %, 0,69 %, 0,7 %, 0,71 %, 0,72 %, 0,73 %, 0,74 %, 0,75 %, 0,76 %, 0,77 %, 0,78 %, 0,79 %, 0,8 %, 0,81 %, 0,82 %, 0,83 %, 0, 84 %, 0,85 %, 0,86 %, 0,87 %, 0,88 %, 0,89 %, 0,9 %, 0,91 %, 0,92 %, 0,93 %, 0,94 %, 0,95 %, 0,96 %, 0,97 %, 0,98 %, 0,99 %, 1 % ou jusqu'à 1,5 %.

10. Procédé selon la revendication 8 ou 9, **caractérisé en ce que** le pourcentage en masse de manganèse est d'au moins 1,01 %, 1,02 %, 1,03 %, 1,04 %, 1,05 %, 1,06 %, 1,07 %, 1,08 %, 1,09 %, 1,1 %, 1,11 %, 1,12 %, 1,13 %, 1,14 %, 1,15 %, 35 1,16 %, 1,17 %, 1,18 %, 1,19 %, 1,2 %, 1, 21 %, 1,22 %, 1,23 %, 1,24 %, 1,25 %, 1,26 %, 1,27 %, 1,28 %, 1,29 %, 1,3 %, 1,31 %, 1,32 %, 1,33 %, 1,34 %, 1,35 %, 1,36 %, 1,37 %, 1,38 %, 1,39 %, 1,4 %, 1,41 %, 1,42 %, 1,43 %, 1,44 %, 1,45 %, 1,46 %, 1,47 %, 1,48 %, 1,49 %, 1,5 %, 1,51 % ou jusqu'à 2 %.

11. Procédé selon l'une quelconque des revendications 8 à 10, **caractérisé en ce que** la somme des pourcentages en masse de silicium et de manganèse est d'au moins 1,3 %, de préférence **en ce que** la somme des pourcentages en masse de silicium et de manganèse est d'au moins 1, 31 %, 1,32 %, 1,33 %, 1,34 %, 1,35 %, 1,36 %, 1,37 %, 1,38 %, 1,39 %, 1,40 %, 1,41 %, 1,42 %, 1,43 %, 1,44 %, 1,45 %, 1,46 %, 1,47 %, 1,48 %, 1,49 %, 1,50 %, 1,51 %, 1,52 %, 1,53 %, 1,54 %, 1,55 %, 1,56 %, 1,57 %, 1,58 %, 1,59 %, 1,6 %, 1,61 %, 1,62 %, 1,63 %, 1,64 %, 1,65 %, 1,66 %, 1,67 %, 1,68 %, 1,69 %, 1,7 %, 1,71 %, 1,72 %, 1,73 %, 1,74 %, 1,75 %, 1,76 %, 1,77 %, 1,78 %, 1,79 %, 1,8 %, 1,81 %, 1,82 %, 1,83 %, 1,4 %, 1,5 %, 1,86 %, 1,87 %, 1,88 %, 1,89 %, 1,9 %, 1,91 %, 1,92 %, 1,93 %, 1,94 %, 1,95 %, 1,96 %, 1,97 %, 1,98 %, 1,99 %, 2 %, 2,01 % ou jusqu'à 2,5 %.

12. Procédé selon l'une des revendications 7 à 11, **caractérisé en ce que**, pour l'exécution des étapes (i) à (iv), on prend en compte la teneur en austénite du produit (P) au deuxième emplacement (II).

13. Procédé selon l'une quelconque des revendications 7 à 12, **caractérisé en ce que** l'adaptation selon l'étape (iv) s'effectue en tenant compte d'une capacité du refroidissement effectué entre le premier emplacement (I) et le deuxième emplacement (II).

14. Procédé selon l'une des revendications précédentes, **caractérisé en ce que**, pour le traitement thermique du produit (P), il est prévu au moins un inducteur (112) qui est commandé ou réglé par le dispositif de régulation (100), l'inducteur (112) étant disposé soit à l'intérieur du four (110) et/ou - vu dans la direction de transport (F) du produit (P) - en amont et/ou en aval du four (110), de préférence **en ce que** l'inducteur (112) est un inducteur transversal.

15. Procédé selon l'une des revendications précédentes, **caractérisé en ce que** la teneur en austénite du produit (P) est déterminée par une technique de mesure au deuxième emplacement (II) et/ou au troisième emplacement (III), de préférence **en ce que** la mesure de la teneur en austénite au deuxième emplacement (II) et/ou au troisième emplacement (III) s'effectue de manière non destructive, en particulier par l'utilisation d'un rayonnement Röntgen (9).

16. Procédé selon l'une des revendications précédentes, **caractérisé en ce qu'**un changement de bobine est prévu pour le produit (P), en particulier à un deuxième emplacement (II) ou à un troisième emplacement (III).

17. Procédé selon l'une des revendications précédentes, **caractérisé en ce que**, dans l'étape (iii), la prédiction de la teneur en austénite du produit (P) au deuxième emplacement (II) ou au troisième emplacement (III) est également effectuée au moyen d'un modèle métallurgique sur la base de la température prédite selon l'étape (ii).
